# FASCICULE DE BREVET EUROPEEN

(11) **EP 3 397 883 B1**
(45) Date de publication et mention de la délivrance du brevet: **05.02.2020**
(21) Numéro de dépôt: 16820310.7
(22) Date de dépôt: 30.12.2016
(51) Int. Cl.: F16L 11/08, F16L 33/01, G01M 5/00

(54) **EMBOUT DE CONNEXION D'UNE LIGNE FLEXIBLE, DISPOSITIF DE MESURE ET PROCÉDÉ ASSOCIÉ**
ANSCHLUSSSPITZE EINER SCHLAUCHLEITUNG, MESSVORRICHTUNG UND ZUGEHÖRIGES VERFAHREN
CONNECTION TIP OF A HOSE LINE, MEASUREMENT DEVICE AND ASSOCIATED METHOD

(30) Priorité: 31.12.2015 FR 1563502
(43) Date de publication de la demande: 07.11.2018
(73) Titulaire: Technip France, 92400 Courbevoie (FR)
(72) Inventeur: NICOLAS, Yann, 92500 Rueil Malmaison (FR)
(74) Mandataire: Lavoix
(86) Numéro de dépôt international: PCT/EP2016/082906
(87) Numéro de publication internationale: WO 2017/114942

(56) Documents cités:
- EP-A1- 0 415 848
- WO-A1-2013/149983
- FR-A1- 3 016 422
- US-A- 4 448 062

## Description

La présente invention concerne un embout de connexion d'une ligne flexible, la ligne flexible comprenant au moins une gaine tubulaire et au moins un élément longiligne disposé autour de la gaine tubulaire, l'embout comprenant une partie d'extrémité de la gaine tubulaire, un tronçon d'extrémité de chaque élément longiligne, une voûte d'extrémité et un capot délimitant une chambre de réception de chaque tronçon d'extrémité.

La ligne flexible est en particulier une conduite flexible de type non liée (« unbonded »), destinée au transport d'hydrocarbures à travers une étendue d'eau, tel qu'un océan, une mer, un lac ou une rivière.

Une telle conduite flexible est par exemple réalisée suivant les documents normatifs API 17J (Spécification for Unbonded Flexible Pipe) et API RP 17B (Recommended Practice for Flexible Pipe) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

La conduite est généralement disposée à travers une étendue d'eau, entre un ensemble de fond, destiné à recueillir le fluide exploité dans le fond de l'étendue d'eau et un ensemble de surface flottant destiné à collecter et à distribuer le fluide. L'ensemble de surface peut être une plateforme semi-submersible, un FPSO ou un autre ensemble flottant.

D'une manière connue, une telle conduite comporte une structure interne tubulaire comprenant au moins une gaine de pression. La conduite comporte des nappes d'armures de traction disposées autour de la structure interne tubulaire.

Dans certains cas, pour l'exploitation de fluides en eaux profondes, la conduite flexible présente une longueur supérieure à 800 m. Les extrémités de la conduite présentent des embouts pour le raccordement à l'ensemble de fond et à l'ensemble de surface.

Ces conduites subissent des efforts très élevés en traction axiale, notamment lorsque l'étendue d'eau dans laquelle est disposée la conduite est très profonde.

Dans ce cas, l'embout supérieur reliant la conduite à l'ensemble de surface doit reprendre une tension axiale très importante, qui peut atteindre plusieurs centaines de tonnes. Ces efforts sont transmis à l'embout par l'intermédiaire des nappes d'armures de traction s'étendant le long de la conduite.

Les éléments d'armure des conduites sont particulièrement sollicités lors de la vie de la conduite. Ceci est notamment le cas au niveau des embouts d'extrémité, où ces éléments longilignes constituant les armures sont ancrés, en étant coulés dans une masse de résine.

L'intégrité des nappes d'armures de traction est donc essentielle à la durée de vie de la conduite. Si des défauts apparaissent sur les éléments d'armure, ils sont susceptibles d'engendrer des faiblesses de certains des éléments, voire des ruptures mécaniques, qui peuvent avoir des conséquences très néfastes sur la tenue de la conduite.

Pour résoudre ce problème, EP 0 415 848 décrit une méthode de surveillance d'une conduite tubulaire flexible dans laquelle des capteurs acoustiques sont disposés sur la gaine externe, ou dans celle-ci, pour écouter les signaux acoustiques émis par les fils d'armure lors de leur frottement les uns contre les autres.

Une telle technique présente l'avantage de pouvoir déterminer des évènements particuliers intervenant sur les fils d'armure, tels que la génération de ruptures.

Cependant, ces capteurs sont passifs et ne permettent pas une analyse active des défauts, à n'importe quel instant, puisqu'il est nécessaire de suivre en permanence les évènements intervenant sur la conduite.

Selon son abrégé, le document FR 3 016 422 A1 décrit un embout comportant une voûte d'extrémité et un capot.

Un but de l'invention est de permettre le suivi efficace de l'intégrité d'éléments longilignes présents sur une conduite flexible, de manière active et individualisée, afin de contrôler l'occurrence de faiblesses mécaniques sur ces éléments.

A cet effet, l'invention a pour objet un embout selon la revendication 1.

L'embout selon l'invention peut comprendre l'une ou plusieurs des caractéristiques correspondant aux revendications 2 à 14, prise(s) isolément ou suivant toute combinaison techniquement possible.

L'invention a également pour objet un dispositif selon la revendication 15.

L'invention a également pour objet un procédé selon la revendication 16.

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'un tronçon central d'une conduite flexible destinée à être connectée à un embout selon l'invention ;
- la figure 2 est une vue partielle en coupe d'un premier embout selon l'invention ;
- la figure 3 est une vue d'un détail d'un tronçon d'extrémité d'un élément d'armure de l'embout de la figure 2, équipé de transducteurs acoustiques ;
- la figure 4 est une vue analogue à la figure 3 d'un autre mode de réalisation d'un élément d'armure selon l'invention ;
- la figure 5 est une vue d'un détail de la figure 2, illustrant le positionnement du transducteur acoustique ;
- la figure 6 est une vue schématique d'une variante de transducteur appliquée sur un élément d'armure ;
- la figure 7 est une vue schématique d'une autre variante de transducteur appliquée sur un élément d'armure ;
- la figure 8 est une vue illustrant schématiquement la propagation d'une onde guidée dans un élément d'armure ;
- la figure 9 est une vue analogue à la figure 2 d'un détail d'un autre embout selon l'invention ;
- la figure 10 est une vue en coupe d'un tronçon d'extrémité d'un élément d'armure de l'embout de la figure 2, équipé de transducteurs acoustiques selon un mode de réalisation de l'invention ;
- la figure 11 est une vue analogue à la figure 10 d'un autre mode de réalisation de l'invention ;
- la figure 12 est une vue analogue à la figure 2 d'un autre embout selon l'invention.

Dans tout ce qui suit, les termes « avant » et « arrière » s'entendent par rapport à la position du milieu d'un tronçon de conduite flexible.

Le terme « arrière » s'entend comme plus proche du milieu du tronçon de la conduite flexible, et plus éloigné d'une extrémité du tronçon de la conduite flexible alors que le terme « avant » s'entend comme plus éloigné du milieu du tronçon de la conduite flexible et comme plus proche d'une extrémité du tronçon de la conduite flexible.

Les termes « extérieur » et « intérieur » s'entendent respectivement comme plus éloigné radialement de l'axe de la conduite flexible et comme plus proche radialement de l'axe de la conduite flexible.

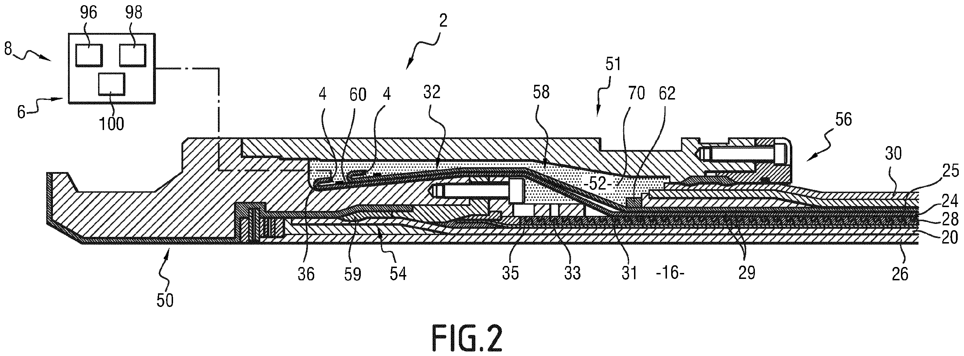

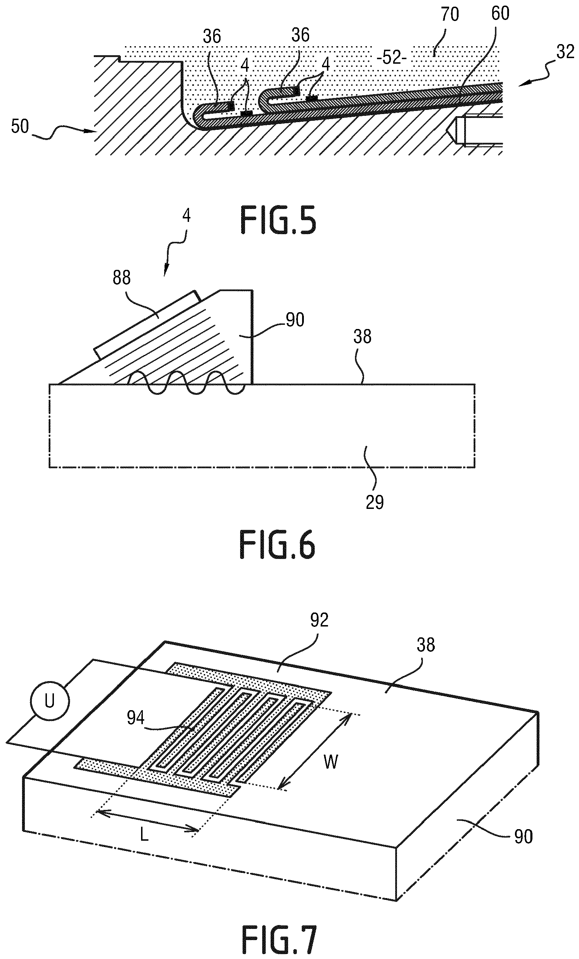

Un premier embout instrumenté 2 selon l'invention d'une conduite flexible 10 est illustré par les figures 2 et 5. L'embout instrumenté 2 est muni d'au moins un transducteur 4 de génération d'une onde ultrasonore guidée dans au moins un élément longiligne de la conduite flexible 10.

Comme on le verra plus bas, l'embout instrumenté 2 est raccordé à une unité 6 de détection de défauts, pour former, avec l'embout instrumenté 2, un dispositif 8 de mesure de l'intégrité des éléments longilignes de la conduite flexible 10.

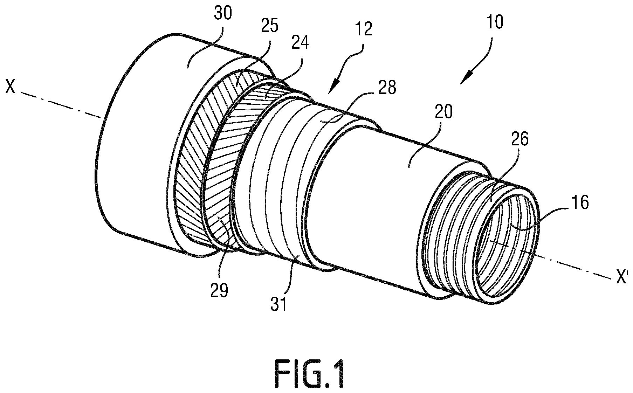

La conduite flexible 10 comporte un tronçon central 12 illustré en partie sur la figure 1. Elle comporte, à chacune des extrémités axiales du tronçon central 12, un embout d'extrémité 2 (non visible sur la Figure 1) dont les parties pertinentes sont représentées sur la figure 2. Au moins un embout d'extrémité 2 de la conduite est instrumenté.

En référence à la figure 1, la conduite 10 délimite un passage central 16 de circulation d'un fluide, avantageusement d'un fluide pétrolier. Le passage central 16 s'étend suivant un axe X-X', entre l'extrémité amont et l'extrémité aval de la conduite 10. Il débouche à travers les embouts 2.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 3000 m.

L'installation d'exploitation de fluide comporte un ensemble de surface notamment flottant et un ensemble de fond (non représentés) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite. Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J, et API RP17B.

Comme illustré par la figure 1, la conduite 10 délimite une pluralité de couches concentriques autour de l'axe X-X', qui s'étendent continûment le long du tronçon central 12 jusqu'aux embouts 2 situés aux extrémités de la conduite.

La conduite 10 comporte au moins une première gaine 20 tubulaire à base de matériau polymère constituant avantageusement une gaine de pression.

La conduite 10 comporte en outre une pluralité de nappes d'armures de traction 24, 25 disposées extérieurement par rapport à la première gaine 20.

Avantageusement, et selon l'utilisation souhaitée, la conduite 10 comporte en outre une carcasse interne 26 disposée à l'intérieur de la gaine de pression 20, une voûte de pression 28 intercalée entre la gaine de pression 20 et les nappes d'armures de traction 24, 25 et une gaine externe 30, destinée à la protection de la conduite 10.

De manière connue, la gaine de pression 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

L'épaisseur de la gaine de pression 20 est par exemple comprise entre 5 mm et 20 mm.

La carcasse 26, lorsqu'elle est présente, est formée par exemple d'un feuillard métallique profilé, enroulé en spirale. Les spires du feuillard sont avantageusement agrafées les unes aux autres, ce qui permet de reprendre les efforts radiaux d'écrasement.

Dans cet exemple, la carcasse 26 est disposée à l'intérieur de la gaine de pression 20. La conduite est alors désignée par le terme anglais « rough bore » en raison de la géométrie de la carcasse 26

En variante (non représentée), la conduite flexible 10 est dépourvue de carcasse interne 26, elle est alors désignée par le terme anglais « smooth bore ».

L'enroulement hélicoïdal du feuillard métallique profilé formant la carcasse 26 est à pas court, c'est-à-dire qu'il présente un angle d'hélice par rapport à l'axe X-X' de valeur absolue proche de 90°, typiquement compris entre 75° et 90°.

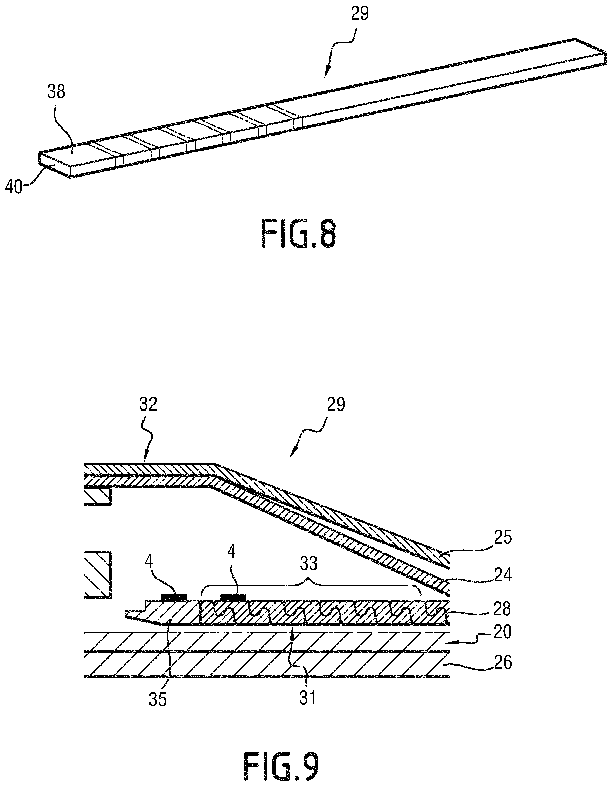

Dans cet exemple, la voûte de pression 28 est destinée à reprendre les efforts liés à la pression régnant à l'intérieur de la gaine de pression 20. Elle est par exemple formée d'un fil profilé 31 métallique entouré en hélice autour de la gaine 20. Le fil profilé 31 présente généralement une géométrie complexe, notamment en forme de Z, de T, de U, de K, de X ou de I. Le fil profilé 31 présente une partie d'extrémité 33 disposée dans l'embout 2. La partie d'extrémité 33 est avantageusement munie à son extrémité avant d'une bague 35 visible notamment sur la figure 9.

La voûte de pression 28 est enroulée en hélice à pas court autour de la gaine de pression 20, c'est-à-dire avec un angle d'hélice par rapport à l'axe X-X' de valeur absolue proche de 90°, typiquement compris entre 75° et 90°.

Dans l'exemple représenté sur la figure 1, la conduite flexible 10 comporte une nappe d'armures interne 24, et une nappe d'armures externe 25 autour de laquelle est disposée la gaine extérieure 30.

Chaque nappe d'armures 24, 25 comporte des éléments d'armure 29 longitudinaux enroulés à pas long autour de l'axe X-X' de la conduite.

Par « enroulé à pas long », on entend que la valeur absolue par rapport à l'axe X-X' de l'angle d'hélice est inférieure à 60°, et est typiquement comprise entre 25° et 55°.

Les éléments d'armure 29 d'une première nappe 24 sont enroulés généralement suivant un angle opposé par rapport aux éléments d'armure 29 d'une deuxième nappe 25. Ainsi, si l'angle d'enroulement des éléments d'armure 29 de la première nappe 24 est égal à + α, α étant compris entre 25° et 55°, l'angle d'enroulement des éléments d'armure 29 de la deuxième nappe 25 disposée au contact de la première nappe 24 est par exemple de - α, avec α compris entre 25° et 55°.

Les éléments d'armure 29 sont par exemple formés par des fils métalliques. En variante, les éléments d'armure 29 sont par exemple formés par des fils ou rubans plats en composite renforcés avec des fibres de carbone.

Comme visible sur la figure 2, les éléments d'armure 29 présentent chacun un tronçon d'extrémité 32 introduit dans l'embout 2. Le tronçon d'extrémité 32 s'étend jusqu'à une extrémité libre disposée dans l'embout 2. Il présente avantageusement une trajectoire hélicoïdale ou pseudo-hélicoïdale d'axe X-X' dans l'embout 2.

Chaque tronçon d'extrémité 32 présente ici un élément d'accrochage 36 dans l'embout 2, par exemple un crochet, une torsade et/ou une vague. Dans l'exemple représenté sur les figures 2 ou 5, l'élément d'accrochage 36 est un crochet.

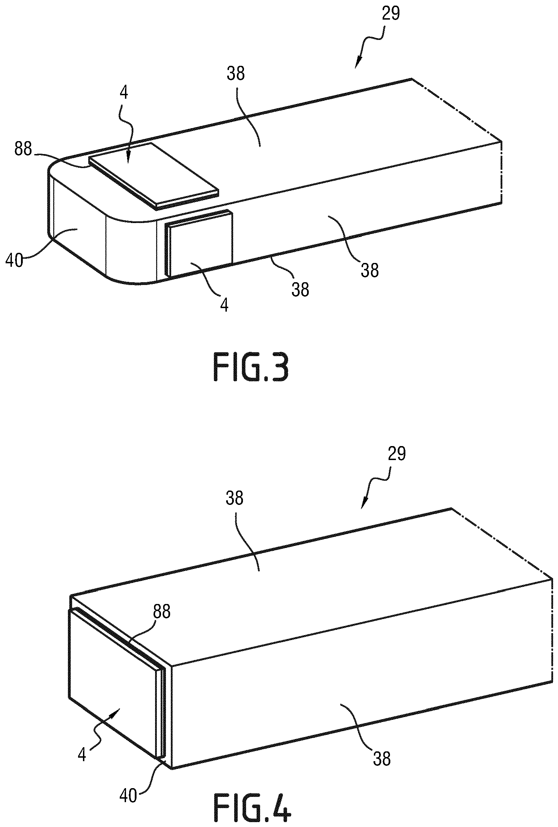

Dans cet exemple, comme illustré par la figure 3 ou par la figure 4, chaque élément d'armure 29 présente au moins une face latérale 38, avantageusement plus de trois faces latérales 38, et une tranche 40, s'étendant transversalement, à l'extrémité libre de l'élément d'armure 29.

L'élément d'armure 29 présente ainsi une section transversale parallélépipédique, notamment rectangulaire. La section transversale est sensiblement constante sur toute la longueur de l'élément d'armure 29.

La gaine externe 30 est destinée à empêcher la perméation de fluide depuis l'extérieur de la conduite flexible vers l'intérieur. Elle est avantageusement réalisée en matériau polymère, notamment à base d'un polyoléfine, tel que du polyéthylène, à base d'un polyamide, tel que du PA11 ou du PA12, ou à base d'un polymère fluoré tel que du polyfluorure de vinylidène (PVDF).

L'épaisseur de la gaine externe 30 est par exemple comprise entre 5 mm et 15 mm.

Comme illustré par la figure 2, chaque embout 2 comporte une voûte d'extrémité 50 et un capot extérieur de liaison 51 faisant saillie axialement vers l'arrière à partir de la voûte 50. Le capot 51 délimite, avec la voûte d'extrémité 50 et avec une partie d'extrémité de la gaine de pression 20, une chambre 52 de réception des tronçons d'extrémité 32 des éléments d'armure 29, et des parties d'extrémité 33 de la voûte de pression 28.

L'embout 2 comporte en outre un ensemble avant 54 d'étanchéité autour de la gaine de pression 20, et un ensemble arrière 56 d'étanchéité autour de la gaine extérieure 30.

L'embout 2 comprend de plus un ensemble 58 de fixation des couches d'armures 24, 25 dans la chambre 52.

Dans cet exemple, la voûte d'extrémité 50 est destinée à raccorder la conduite 10 à un autre embout de connexion 2 ou à des équipements terminaux, avantageusement par l'intermédiaire d'une bride d'extrémité (non représentée).

Le capot 51 délimite la chambre 52 radialement vers l'extérieur. Il couvre vers l'extérieur les tronçons d'extrémité 32 des nappes d'armures 24, 25 ainsi que les parties d'extrémité 33 de la voûte de pression 28 et s'étend axialement jusqu'à l'ensemble arrière d'étanchéité 56.

L'ensemble avant 54 d'étanchéité comporte au moins une bague 59 de sertissage de la gaine de pression 20.

L'ensemble de fixation 58 comporte un collier de blocage arrière 62, appliqué sur la nappe externe 25 et avantageusement un matériau 70 de remplissage solide de la chambre 52, noyant les tronçons d'extrémité 32 des nappes 24, 25 et s'il est installé, le collier 62.

Dans cet exemple, l'embout instrumenté 2 présente une pluralité de transducteurs 4 de génération d'ondes ultrasonores guidées, rapportés sur une pluralité d'éléments filiformes constitués par des éléments d'armures 29 des nappes d'armures 24, 25.

En particulier, l'embout instrumenté 2 présente au moins un premier transducteur de génération 4 disposé sur un élément d'armure 29 de la nappe d'armures interne 24, de préférence une pluralité de premiers transducteurs de génération 4 disposés sur des éléments d'armures 29 distincts de la nappe d'armures interne 24.

De même, l'embout instrumenté 2 présente au moins un deuxième transducteur de génération 4, disposé sur un élément d'armure 29 de la nappe d'armures externe 25, de préférence une pluralité de deuxièmes transducteurs de génération 4, disposés sur des éléments d'armures 29 distincts de la nappe d'armures externe 25.

Avantageusement, chaque élément d'armure 29 de chaque nappe 24, 25 est muni d'au moins un transducteur de génération 4.

Chaque transducteur de génération 4 est disposé sur un tronçon d'extrémité 32 de l'élément d'armure 29, dans la chambre 52.

Chaque transducteur de génération 4 est disposé au voisinage de l'extrémité libre du tronçon d'extrémité 32, en particulier sur l'élément d'accrochage 36.

Chaque transducteur de génération 4 est de préférence situé sur une surface plane, avant ou après la partie courbée de l'élément d'accrochage 36.

Chaque transducteur de génération 4 est avantageusement situé axialement en regard d'une surface extérieure 60 de la voûte 50 sur laquelle reposent les tronçons d'extrémité 32.

Dans l'exemple représenté sur la figure 3, les transducteurs de génération 4 sont fixés sur des faces latérales respectives 38 de l'élément d'armure 29 au voisinage de l'extrémité libre.

En variante ou en complément, comme illustré par la figure 4, au moins un transducteur de génération 4 est fixé sur la tranche 40.

La fixation de chaque transducteur de génération 4 s'effectue avantageusement par collage, notamment à base d'une colle thermoplastique telle qu'une colle polyamide ou cyanocrylate, ou encore à base d'une colle thermodurcissable telle qu'une colle époxy.

Dans l'exemple représenté sur la figure 2, chaque transducteur de génération 4 est recouvert par du matériau de remplissage 70 durci présent dans la chambre 52 au contact du tronçon d'extrémité 32 de l'élément d'armure 29. Dans une variante (non représentée), le transducteur de génération 4 est couvert par une couche de matériau de protection d'épaisseur inférieure à 50 % de l'épaisseur du transducteur de génération 4.

Ce matériau de protection est, par exemple, réalisé à base de silicone.

Pour assurer une bonne compacité dans la chambre 52, le transducteur de génération 4 présente un volume total inférieur à 200 mm³, notamment compris entre 20 mm³ et 50 mm³.

Le transducteur de génération 4 est plat. Il présente de préférence une épaisseur inférieure à 2 mm, notamment comprise entre 0,1 mm et 0,5 mm.

La longueur du transducteur 4 est par exemple comprise entre 5 mm et 20 mm et sa largeur est comprise entre 5 mm et 20 mm.

Chaque transducteur de génération 4 est propre à engendrer une onde ultrasonore guidée ou un train d'ondes ultrasonores guidées, destinée à se propager dans l'élément d'armure 29.

L'onde ultrasonore guidée est propre à être captée par un transducteur de réception (non représenté), qui est par exemple un transducteur distinct du transducteur de génération 4, placé à distance de celui-ci, par exemple à au moins 1 m, notamment à plusieurs mètres sur le même élément d'armure 29, suivant un mode dit « pitch-catch ».

En variante, le transducteur de réception est formé par le transducteur de génération 4, l'onde guidée étant réfléchie par un défaut ou/et par une extrémité de l'élément d'armure 29 pour être captée à nouveau par le transducteur 4 qui fonctionne à la fois comme un émetteur et comme un récepteur.

Les temps d'arrivée des échos de signal réfléchi indiquent les distances relatives. Si un défaut est croisé sur le chemin de l'onde, une partie de son énergie sera alors réfléchie, et un écho supplémentaire apparaîtra plus tôt sur le transducteur 4.

L'onde guidée engendrée par le transducteur de génération 4 est propre à se propager dans l'élément d'armure 29. L'onde est guidée par la géométrie de l'élément d'armure 29 et se propage entre les faces 38 de l'élément d'armure 29. Compte tenu des propriétés de symétrie, de la nature et de la dispersion des ondes, il existe un nombre fini de modes de propagation à une fréquence donnée.

L'énergie est répartie dans l'épaisseur de façon différente suivant le mode de propagation considéré. En reliant l'énergie de l'onde avec l'amplitude des déplacements, en connaissant la répartition de l'énergie d'un mode d'une onde guidée dans un élément d'armure 29, des défauts fins situés dans l'épaisseur aux endroits où cette énergie est importante seront alors perturbateurs.

Dans un élément longiligne tel qu'un élément d'armure 29, trois familles d'ondes guidées sont principalement susceptibles de se propager.

Un premier mode se propage sur la surface de l'élément d'armure 29 et constitue des ondes de Rayleigh. Dans ce mode, les ondes n'ébranlent qu'une épaisseur de matière de l'ordre de la longueur de l'onde.

Un deuxième mode à une seule composante, constituant des ondes de Love, correspond aux ondes transverses dont la polarisation est perpendiculaire au plan de propagation. Ces ondes sont aussi dénommées ondes SH car ce sont des ondes S (shear waves pour « onde de cisaillement ») avec une polarisation horizontale.

Dans le cas d'un élément d'armure comprenant un matériau isotrope, un troisième mode à deux composantes est susceptible de se propager dans un élément d'armure 29 et constitue des ondes de Lamb ou ondes de plaque. Cette famille de modes présente une polarisation qui est contenue dans le plan de propagation.

Les ondes de Lamb sont des modes propres de l'élément d'armure 29. Ces ondes, de type P-SV, résultent du couplage entre les ondes longitudinales (L ou P en anglais) et les ondes transverses verticales (TV ou SV en anglais).

Ces modes de Lamb sont classés en deux familles relatives aux symétries du champ de déplacement dans l'épaisseur de la plaque. On distingue donc les modes symétriques Sn et antisymétriques An, dont les déformations sont respectivement symétriques et antisymétriques dans l'épaisseur de l'élément d'armure 29. L'indice n est un nombre entier qui correspond à l'ordre du mode de propagation.

La propagation des ondes guidées dans chaque élément d'armure 29 permet d'observer les conversions du ou des modes incidents. Les obstacles ou défauts qui sont matérialisés par des changements plus ou moins brusques d'impédance, favorisent certaines conversions de modes.

En général, un signal acquis par le transducteur de réception lors d'une inspection contient des contributions correspondant à la propagation de plusieurs modes, chaque mode possédant des caractéristiques propres variables avec la fréquence.

Les grandeurs caractéristiques associées à chaque mode (vitesse de phase, vitesse de groupe) peuvent être représentées sous la forme de courbes de dispersion. Plus la fréquence est élevée, plus la résolution spatiale est élevée et meilleure sera la détectabilité des défauts de petites tailles. Cependant, l'amortissement des ondes ultrasonores est plus rapide et la distance d'examen se réduit.

En particulier la mesure de l'énergie transportée par une onde de Lamb est utile pour faire des bilans d'énergie entre les ondes incidentes et celles réfléchies ou transmises après un défaut par exemple.

La connaissance des vitesses de phase est utilisée pour la reconnaissance des différentes ondes en présence dans l'élément d'armure sur des images présentant les évolutions spatio-temporelles des déplacements normaux.

De préférence, le transducteur de génération 4 engendre un mode unique (ou prépondérant) de propagation qui présente une dispersion limitée dans une gamme de fréquence la plus large possible. Le mode de propagation le plus approprié est choisi en fonction de la géométrie et des dimensions du défaut que l'on cherche à détecter, et sur sa sensibilité aux caractéristiques géométriques du défaut.

Le choix du mode de propagation est associé au choix d'une fréquence qui peut être comprise entre 10 kHz et 5 MHz, notamment entre 50 kHz et 5 MHz, avantageusement entre 50 kHz et 500 kHz.

Le mode de propagation prépondérant est choisi en fonction de sa répartition spatiale dans la section, du flux d'énergie transporté pour la détection d'un défaut localisé en surface ou à cœur de l'élément d'armure 29.

Ainsi, l'utilisation des ondes guidées dans l'épaisseur du matériau (ondes de Lamb et SH) présente un grand intérêt pour le contrôle des éléments d'armure 29, car les ondes guidées permettent un contrôle très rapide sur plusieurs dizaines de mètres de la présence de défaut de corrosions, de fissures et de ruptures.

Les ondes de surface sont bien adaptées pour la détection de petits défauts de surface ou pour quantifier la qualité et la nature de l'interface entre un élément d'armure 29 et son environnement, en particulier pour contrôler l'interface avec le matériau de remplissage 70 dans l'embout 2, ou la présence d'eau dans l'annulaire entre la gaine pression 20 et la gaine externe 30.

Comme la géométrie de l'élément d'armure 29 guide les ondes, la présence d'une variation d'environnement aux interfaces de l'élément d'armure 29 est détectable. En fonction de la nature de l'environnement au contact des interfaces de l'élément d'armure 29, les règles de propagation des ondes guidées au niveau de ces interfaces sont modifiées.

Par exemple, en cas d'inondation de l'annulaire de la ligne flexible par de l'eau de mer, la propagation d'ondes le long d'un élément d'armure 29 immergé aura pour effet de modifier leurs propriétés. Les ondes ainsi réfléchies vers le transducteur de génération auront une amplitude plus faible que celles des ondes émises. Une partie de l'énergie est transférée au milieu environnant, l'eau de mer dans le cas présent.

Le transducteur de génération 4 est de préférence un transducteur piézoélectrique. Dans un premier exemple, illustré par la figure 3 ou par la figure 4, le transducteur de génération 4 est de préférence une membrane piézoélectrique 88 (désignée par le terme anglais « Piezoelectrique Wafer », ou « PW ») collée sur l'élément d'armure 29. Une telle membrane 88 permet notamment de générer des ondes guidées de Rayleigh et de Lamb dans l'élément d'armure 29.

En variante, comme illustré par la figure 6, un coin 90 de matériau plastique, par exemple de plexiglas est interposé entre la membrane et la face 38 de l'élément d'armure 29. La membrane 88 est ainsi inclinée d'un angle nul par rapport à la surface du coin 90, en revanche, la surface du coin 90 est quant à elle inclinée d'un angle non nul, de préférence supérieur à 0° et au plus égal à 70° par rapport à la face latérale 38 de l'élément d'armure 29. Une telle disposition permet également d'engendrer des ondes guidées de Rayleigh et de Lamb dans l'élément d'armure 29.

En variante (non représentée) le transducteur de génération 4 est un transducteur à angle variable.

Dans la variante représentée sur la figure 7, le transducteur de génération 4 est un transducteur interdigital 92. Ce transducteur 92 comprend des électrodes 94 parallèles en forme de doigts disposées parallèlement les uns par rapport aux autres, avec un premier groupe d'électrodes raccordées à une première borne d'une source d'excitation et un deuxième groupe d'électrodes raccordées à une deuxième borne d'une source d'excitation. Les électrodes 94 sont de préférence imprimées sur un film plastique de type PVDF ou sur une feuille piézocomposite. Ce transducteur permet également d'engendrer des ondes guidées de Rayleigh et de Lamb dans l'élément d'armure 29.

Dans une autre variante (non représentée), le transducteur de génération 4 comprend des éléments piézoélectriques sous forme de barrette. Il est désigné par le terme « peigne excité » selon un mode de vibration approprié (longitudinal ou transversal).

En variante, le transducteur de génération 4 est un transducteur acoustique électromagnétique désigné par l'acronyme anglais « EMAT ».

Ce transducteur fonctionne par force de Lorentz ou par effet magnétostrictif directement dans l'élément d'armure 29.

En variante encore, le transducteur de génération 4 est un transducteur à effet magnétostrictif utilisant un feuillard ou « patch » de matériaux magnétostrictifs (principalement feuillard de nickel) directement collé sur l'élément d'armure 29 et excité extérieurement par un bobinage de forme et dimensions appropriées alimenté par un générateur de courant électrique de forte intensité.

En référence à la figure 2, l'unité de détection de défaut 6 comprend un générateur de signal 96, raccordée à chaque transducteur de génération 4 pour exciter le transducteur de génération 4 et générer les ondes guidées, un détecteur de signal 98, raccordée à chaque transducteur de réception, pour capter le signal reçu par le transducteur de réception, et un calculateur 100 de traitement du signal reçu

Le générateur de signal 96 est propre à générer au moins deux types de signaux. Un premier type de signaux comprend des impulsions pouvant générer des pulses de tension pouvant atteindre jusqu'à 200V, de très courte durée (<0,1 pts). Un deuxième type de signaux consiste en des trains de signaux, avantageusement sinusoïdaux, d'une durée pouvant aller jusqu'à plusieurs centaines de cycles et d'une fréquence définie, par exemple comprise entre 10 KHz et 5 MHz. Plus le train de signaux est long (jusqu'à quelques centaines de périodes), plus l'énergie transportée devient importante.

Comme indiqué précédemment, la fréquence d'excitation est comprise entre 10 kHz et 5 MHz, notamment entre 50 kHz et 5 MHz, avantageusement entre 50 kHz et 500 kHz.

Le détecteur de signal 98 est raccordé au transducteur de réception pour capter le signal reçu, soit directement lors d'une propagation entre le transducteur de génération 4 et le transducteur de réception placé à l'écart de celui-ci, soit reçu par réflexion, lorsque le transducteur de réception est constitué par le transducteur de génération 4.

Le calculateur de traitement 100 est propre à traiter les signaux temporels reçus du détecteur de signal 98. Le calculateur de traitement 100 est par exemple propre à effectuer une transformation pour distinguer les paquets d'ondes qui se déplacent à des vitesses différentes, pour obtenir une représentation temps-fréquence, par exemple par transformation de Fourier. Ce traitement comprend par exemple le glissement d'une fenêtre temporelle sur le signal et pour chaque position de la fenêtre, le calcul de la transformée de Fourier. Les modes guidés apparaissent généralement sous forme de tâches dans une telle représentation.

Pour identifier les modes présents dans un signal, le calculateur de traitement 100 est avantageusement propre à effectuer une double transformation de Fourier spatio-temporelle. À cet effet, le signal capté par le détecteur de signal 98 subit deux transformées de Fourier successives, temporelle puis spatiale.

Le signal résultant s'exprime alors en fonction du nombre d'onde kz et de la fréquence f. La représentation obtenue sépare parfaitement les différents modes présents et la comparaison avec les courbes de dispersion liant les nombres d'onde et fréquence permet d'identifier les modes. Ce traitement est nommé « tout-fréquence » et caractérise les modes présents, ce qui permet d'en déduire les défauts éventuels par changement de mode.

Dans une variante, le calculateur de traitement 100 est propre à extraire des informations sur les ondes se propageant le long des éléments d'armure 29, en effectuant un traitement par « ondelettes ». Les ondelettes (ou « wavelet » en anglais) sont des parties du signal détecté qui correspondent, pour chacune, à un contenu fréquentiel. Le calculateur de traitement 100 est ainsi propre à décomposer le signal en ondelettes. L'intérêt de cette transformation est de décomposer les signaux dans un espace temps-fréquence. Les signaux des ondes générées qui pourraient alors se mélanger, peuvent se séparer dans cet espace si les vitesses des ondes sont différentes, ce qui est généralement le cas pour les ondes guidées.

Un procédé de montage d'un embout instrumenté 2 selon l'invention va maintenant être décrit.

Initialement, après fabrication du tronçon central 12 de la conduite flexible 10, l'extrémité de la gaine externe 30 est découpée pour faire apparaître les tronçons d'extrémité 32 des éléments d'armure 29 de chaque nappe d'armure 24, 25.

Dans cette configuration, le capot 51 et les éléments de l'ensemble arrière d'étanchéité 56 sont dégagés autour de la gaine externe 30, à l'arrière des tronçons d'extrémité 32.

Puis, les éléments d'armure 29 sont soulevés pour permettre l'engagement de la voûte d'extrémité 50 et des éléments de l'ensemble avant 54 d'étanchéité.

Les éléments d'accrochage 36, ici des crochets, sont alors réalisés à l'extrémité libre de chaque élément d'armure 29.

Les transducteurs de génération 4 sont alors fournis. Chaque transducteur de génération 4 est appliqué sur une face latérale 38 d'un élément d'armure 29 et/ou sur la tranche 40 de l'élément d'armure 29. Le transducteur de génération 4 est fixé par collage sur l'élément d'armure 29.

Au moins un élément d'armure 29 de la nappe interne 24 et au moins un élément d'armure 29 de la nappe externe 25 sont équipés d'un transducteur de génération 4. De préférence, une pluralité d'éléments d'armure 29 de la nappe interne 24 et une pluralité d'éléments d'armure de la nappe externe 25 sont équipés chacun d'au moins un transducteur de génération 4.

Avantageusement, tous les éléments d'armure 29 sont équipés d'au moins transducteur de génération 4.

Les transducteurs 4 sont ensuite raccordés, par exemple de manière filaire à l'unité 6 de détection de défauts.

Ensuite, l'ensemble avant d'étanchéité 54 est mis en place pour sertir la gaine de pression 20. Les éléments d'armure 29 sont alors repliés vers l'avant pour s'appliquer contre la surface extérieure 60 de la voûte d'extrémité 50.

Le capot 51 est déplacé vers l'avant pour se monter sur la voûte d'extrémité 50 et fermer la chambre de réception 52. L'ensemble arrière d'étanchéité 56 est alors mis en place pour sertir la gaine extérieure 30.

Puis, du matériau de remplissage 70 est coulé dans la chambre 52 pour remplir la chambre 52. Le matériau noie les tronçons d'extrémité 32 des éléments d'armure 29 et recouvre les transducteurs de génération 4.

Les transducteurs de génération 4 présentant un faible encombrement stérique, et une épaisseur limitée, ils ne perturbent pas la coulée du matériau de remplissage 70 et la fixation des tronçons d'extrémité 32 des éléments d'armure 29 dans la chambre de réception 52 de l'embout 2.

Un procédé de mesure de l'intégrité des éléments d'armure 29 d'une conduite flexible 10, mis en œuvre à l'aide d'un embout instrumenté 2 selon l'invention, va maintenant être décrit.

Initialement, la conduite flexible 10, munie d'au moins un embout instrumenté 2, est fournie. Le générateur de signaux 96 de l'unité de détection de défauts 6 est raccordé au transducteur de génération 4 disposé dans l'embout instrumenté 2.

À intervalles réguliers, par exemple à une fréquence comprise entre 10 KHz et 5 MHz, le générateur de signaux 96 est activé pour engendrer des impulsions pouvant générer des puises, avec une courte durée ou des trains de signaux d'une durée pouvant aller jusqu'à plusieurs centaines de cycles.

La fréquence des signaux 96 est de préférence comprise entre 10 kHz et 5 MHz, notamment entre 50 kHz et 5 MHz, avantageusement entre 50 kHz et 500 kHz.

Chaque transducteur de génération 4 engendre donc sur l'élément d'armure 29 sur lequel il est disposé une onde ultrasonore guidée, qui se propage le long de l'élément d'armure 29, comme illustré par la figure 8.

Comme indiqué plus haut, l'onde est une onde de Rayleigh se propageant préférentiellement à la surface de l'élément d'armure 29, et/ou une onde de Lamb se propageant au cœur de l'élément d'armure 29.

L'onde ultrasonore guidée se propage rapidement sur une distance supérieure à 1 m, notamment supérieure à 10 m et compris avantageusement entre 10 m et 100 m.

Lors du passage dans l'élément d'armure 29, si l'onde rencontre des défauts et/ou des obstacles, ceci engendre un changement plus ou moins brusque d'impédance, pouvant convertir les modes de propagation incidents.

Dans le cas où le transducteur de réception est distinct du transducteur de génération 4, le signal obtenu après propagation est recueilli directement par le transducteur de réception située à distance, sans réflexion du signal.

À l'inverse, lorsque le transducteur de réception est constitué par le transducteur de génération 4, le signal se réfléchit, par exemple au passage d'un défaut, ou/et à l'extrémité de l'élément d'armure 29, et le signal réfléchi est reçu par le transducteur de génération 4.

Le signal reçu par le transducteur de réception est recueilli par le récepteur de signal 98, puis est traité par le calculateur de traitement 100.

Avantageusement, les grandeurs caractéristiques associées à chaque mode, tels que la vitesse de phase, la vitesse de groupe sont calculées et sont représentées sous la forme de courbes de dispersion. L'énergie transportée par l'onde ultrasonore guidée est également mesurée pour faire des bilans d'énergie entre les ondes incidentes et celles réfléchies ou transmises après un défaut.

Comme précisé précédemment, pour détecter les modes présents, une représentation temps - fréquence peut être calculée, en faisant glisser une fenêtre temporelle sur le signal, et pour chaque position de la fenêtre, en calculant la transformée de Fourier. Les modes guidés apparaissent alors sous forme de zones particulières sur la représentation temps-fréquence.

En variante, comme indiqué précédemment, une double transformée de Fourier spatio-temporelle est réalisée pour obtenir une représentation en fonction du nombre d'ondes et de la fréquence qui sépare les modes présents. Ceci permet la comparaison avec les modes de dispersion liant les nombres d'onde et fréquence, pour une identification des modes, et pour la détermination des éventuelles conversions de modes liés aux défauts.

En variante, un traitement par ondelette est effectué, comme indiqué plus haut.

Il est ainsi possible de détecter des casses, des fissures et de la corrosion d'éléments d'armures 29 de la nappe externe 25 et de la nappe interne 24 dans l'embout 2 ou en longueur courante dans le tronçon central 12 jusqu'à une distance de plusieurs dizaines de mètres, par exemple, sous le raidisseur.

La présence d'eau dans l'annulaire jusqu'à une distance de plusieurs dizaines de mètres peut également être contrôlée.

Le procédé selon l'invention permet en outre d'évaluer la qualité de l'interface résine / armure de la nappe externe 25 et de la nappe interne 24 dans les embouts 2.

Dans une variante, représentée sur la figure 9, au moins un transducteur de génération 4 est monté sur un fil 31 de la voûte de pression 28, dans la chambre de réception 52 de l'embout 2, et/ou sur la bague 35 située à l'extrémité du fil 31.

Il est alors possible transmettre un signal acoustique sous la forme d'une onde guidée dans l'élément longiligne constitué par un fil 31 de la voute de pression 28. Il est ainsi possible de détecter des casses, des fissures sur les fils constituant la voûte de pression 28.

En variante (non représentée), au moins transducteur de génération 4 est monté sur un fil de frette, lorsqu'une telle frette est présente.

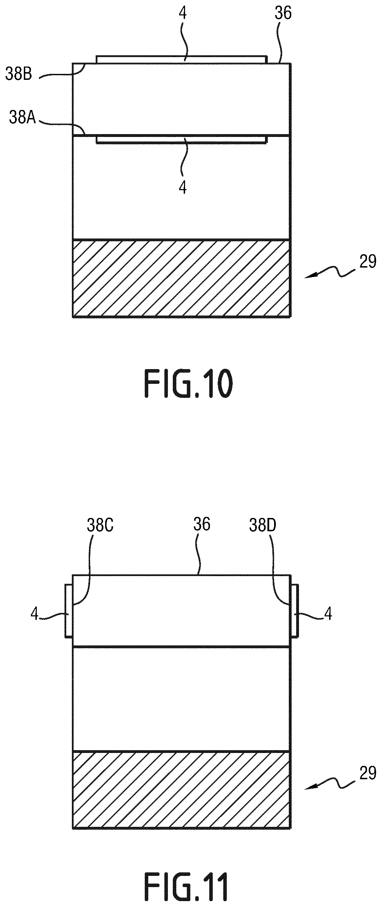

Dans des variantes de réalisation préférées de l'invention illustrées sur les figures 10 et 11, deux transducteurs 4 sont fixés en opposition, c'est-à-dire de façon diamétralement opposée, sur des faces opposées respectives 38A, 38B ; 38C, 38D de l'élément d'armure 29. De préférence, les transducteurs 4 sont situés sur l'élément d'accrochage 36, après sa partie courbée, au niveau de son extrémité libre.

Dans un exemple illustré sur la figure 10, un transducteur 4 est fixé sur la face interne 38A de l'élément d'armure 29 située en regard de la surface extérieure 60 de la voûte d'extrémité 50, tandis qu'un autre transducteur 4 est fixé sur la face externe 38B de l'élément d'armure 29 située en regard de la surface intérieure du capot 51.

Dans un autre exemple illustré sur la figure 11, un transducteur 4 est fixé sur une face latérale 38C de l'élément d'armure 29, tandis qu'un autre transducteur 4 est fixé sur l'autre face latérale 38D de l'élément d'armure 29.

Un des transducteurs 4 est un transducteur de génération d'ondes tandis que l'autre transducteur diamétralement opposé est un transducteur de réception des ondes générées dans l'élément d'armure 29.

Avec cette configuration dans laquelle les transducteurs de génération et de réception 4 sont fixés sur l'élément d'armure 29 de façon diamétralement opposée, la gamme de fréquence ou, l'énergie nécessaire à la génération de trains d'ondes dans l'élément d'armure 29 est moindre que pour les autres configurations de positionnement des transducteurs 4 décrites ci-avant.

Il est donc possible d'optimiser la conception des transducteurs, c'est-à-dire d'optimiser leur forme et/ou leur dimension, eu égard aux performances recherchées.

En outre, cette variante de réalisation de l'invention permet de découpler la fonction de génération d'ondes guidées de la fonction de détection des ondes guidées réfléchies, contrairement au cas où le transducteur de génération assure également la réception des ondes guidées.

De la sorte, la fonction principale de chaque transducteur est optimisée. Par exemple, il est possible d'améliorer la fonction principale de détection du transducteur de réception des ondes guidées en augmentant sa sensibilité de détection.

Selon un mode particulier de l'invention, le au moins un transducteur de génération 4 est positionné, puis fixé sur au moins un élément d'armure 29 de la nappe d'armures externe 25 et/ou de la nappe d'armure interne 24, afin de suivre l'évolution de l'intégrité du au moins un élément d'armure 29 en temps réel lorsque la ligne flexible est en production.

En production, la ligne flexible est soumise à des efforts longitudinaux de traction qui sont repris en majorité par les éléments d'armures 29 et plus particulièrement au niveau de leurs extrémités situées dans la chambre 52 délimitée par la voûte d'extrémité 50 et le capot 51 de l'embout 2 de connexion.

Une étude a été menée par la Demanderesse aux fins d'évaluer la probabilité qu'une onde puisse se propager dans un élément d'armure 29 soumis à un chargement mécanique en traction.

A cette fin, plusieurs échantillons d'élément d'armure 29 sur lesquels ont été fixés au préalable des transducteurs de génération 4 sont installés entre les mors d'une machine traction. A intervalles de temps réguliers, l'élément d'armure 29 est tractionné ou plutôt mis en tension. L'effort de tension appliqué à l'élément d'armure 29 est tel que ce dernier s'étire d'une longueur donnée. Dès l'élément d'armure allongé de la longueur souhaitée et représentative de ce qu'est amené à voir un fil d'armure de traction lorsque la conduite est en service, on génère alors une impulsion au travers de l'élément d'armure 29. On observe ensuite comment le train d'ondes se déplace le long de l'élément d'armure 29.

A cet effet, la Demanderesse a pu observer que la génération d'impulsions au travers des éléments d'armure 29 ayant été tractionnés n'affecte pas la transmission de train d'ondes. Le fait que l'élément d'armure 29 ait été étiré et donc que la microstructure ait été modifiée n'empêche pas le train d'ondes de circuler le long dudit élément d'armure 29.

Toutefois, cela reste valable dans le cas où les éléments d'armures 29 sont tractionnés jusqu'à leur limite maximale d'élasticité. Dans le cas où l'élément d'armure 29 a été tractionné au-delà de cette limite et a donc été plastifié, l'impulsion générée ne permet pas la transmission du train d'ondes sur toute la longueur. Le train d'ondes est très fortement atténué au niveau de la zone plastifiée.

Suivant le mode de propagation et/ou la fréquence d'excitation des ondes guidées générées dans l'élément d'armure 29, l'amplitude des ondes guidées peut être inchangée ou au contraire modifiée, c'est-à-dire plus grande ou plus petite.

De plus, le mode de propagation et/ou la fréquence d'excitation des ondes guidées générées dans l'élément d'armure 29 peut également influer sur leur vitesse de propagation. Leur vitesse peut être accélérée ou au contraire ralentie lorsqu'elles rencontrent la zone de l'élément d'armure 29 qui a été étirée mécaniquement.

A l'inverse, lorsque les éléments d'armures 29 ont été étirés mécaniquement jusque dans leur domaine de plastification, les ondes guidées générées ne sont pas transmises sur l'ensemble de la longueur de l'élément d'armure 29. Celle-ci sont fortement atténuées voir stoppées par la zone de l'élément d'armure 29 qui a été étirée mécaniquement jusqu'à plastification.

Par conséquent, outre le suivi de l'intégrité des éléments d'armures 29 aux fins de détecter des fissures et/ou des casses ainsi que de la corrosion (pertes d'épaisseur), ce procédé de mesure permet également de vérifier en temps réel l'allongement vu par chacun des éléments d'armures 29 lorsque la ligne flexible est en production.

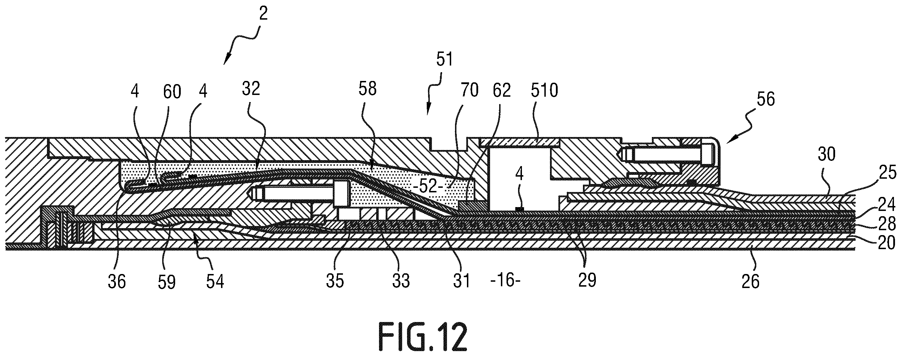

Sur la figure 12, est illustré un autre embout 2 de connexion de la ligne flexible 10 selon l'invention. Cet embout 2 comprend dans sa partie arrière une fenêtre 510 d'inspection visuelle ménagée dans l'épaisseur du capot 51. Une telle fenêtre 510 est décrite par exemple dans la demande internationale WO2016/042487 déposée par la Demanderesse. La fenêtre 510 est placée en regard d'au moins un élément d'armure 29 de la nappe d'armures externe 25 et/ou d'un collier de blocage arrière 62 du ou de chaque élément d'armure 29.

La présence de la fenêtre 510 d'inspection visuelle permet un accès à la nappe d'armures externe 25 de la ligne flexible 10. Ainsi, outre le fait de pouvoir suivre visuellement et en temps réel l'intégrité mécanique des fils d'armures, la fenêtre 510 offre avantageusement la possibilité de venir positionner puis fixer des transducteurs de génération 4 sur chacun des fils composant la nappe d'armures externe 25 pour contrôler et détecter en temps réel, l'initiation de fissure et/ou de casse au sein des fils d'armures.

De plus, l'implémentation des transducteurs de génération 4 permet aussi la détection d'inondation de l'annulaire de la ligne 10 en arrière de l'embout 2, tout comme l'éventualité qu'un ou plusieurs fils d'armures soit corrodé.

De préférence, l'implémentation des transducteurs de génération 4 sur les fils d'armures de la nappe d'armures externe 25 est réalisée lors de la fabrication de la ligne flexible. Toutefois, l'implémentation des transducteurs 4 peut aussi être réalisée ultérieurement, avant l'installation de la ligne dans l'étendue d'eau ou même, après sa mise en production.

## Revendications

1. Embout (2) de connexion d'une ligne flexible, la ligne flexible comportant au moins une gaine (20) tubulaire et au moins un élément longiligne (29 ; 31) disposé autour de la gaine (20) tubulaire, l'embout (2) comprenant :
- une partie d'extrémité de la gaine (20) tubulaire ;
- un tronçon d'extrémité (32) de chaque élément longiligne (29 ; 31) ;
- une voûte d'extrémité (50) et un capot (51) délimitant une chambre de réception (52) de chaque tronçon d'extrémité (32) ;
**caractérisé en ce que** l'embout (2) comporte au moins un transducteur de génération (4) d'une onde ultrasonore guidée dans l'élément longiligne (29 ; 31), le transducteur de génération (4) étant appliqué sur l'élément longiligne (29 ; 31) dans la chambre de réception (52), le transducteur de génération (4) présentant un volume inférieur à 200 mm³, notamment compris entre 20 mm³ et 50 mm³.

2. Embout (2) selon la revendication 1, dans lequel, le transducteur de génération (4) présente une épaisseur, prise par rapport à la gaine (20), inférieure à 2 mm, avantageusement inférieure à 1/10 mm.

3. Embout (2) selon l'une quelconque des revendications précédentes, **caractérisé en ce qu'**il comporte un matériau (70) de remplissage de la chambre de réception (52), le matériau de remplissage (70) étant en contact avec le tronçon d'extrémité (32) de l'élément longiligne (29 ; 31) et recouvrant le transducteur de génération (4).

4. Embout (2) selon l'une quelconque des revendications précédentes, dans lequel la ligne flexible comprend au moins une nappe d'armures (24, 25), l'élément longiligne (29 ; 31) étant un élément d'armure de la nappe d'armures (24, 25).

5. Embout (2) selon la revendication 4, dans lequel la conduite flexible comprend au moins une nappe d'armures interne (24) et au moins une nappe d'armures externe (25), l'embout (2) comprenant au moins un tronçon d'extrémité (32) interne d'un élément d'armure (29) de la nappe d'armure interne (24), et au moins un tronçon d'extrémité (32) externe d'un élément d'armure (29) de la nappe d'armures externe (25),
l'embout (2) comprenant un premier transducteur de génération (4) d'une onde ultrasonore guidée appliqué sur le tronçon d'extrémité (32) interne, et un deuxième transducteur de génération (4) d'une onde ultrasonore guidée appliqué sur le tronçon d'extrémité (32) externe.

6. Embout (2) selon l'une quelconque des revendications précédentes, dans lequel le transducteur de génération (4) est collé sur le tronçon d'extrémité (32) de l'élément longiligne (29 ; 31).

7. Embout (2) selon l'une quelconque des revendications précédentes, dans lequel le transducteur de génération (4) est couvert par une couche de matériau de protection d'épaisseur inférieure à 50% de l'épaisseur du transducteur de génération (4).

8. Embout (2) selon l'une quelconque des revendications précédentes, dans lequel le tronçon d'extrémité (32) de l'élément longiligne (29 ; 31) comprend au moins une face latérale (38) et au moins une tranche (40) située à l'extrémité libre du tronçon d'extrémité (32), le transducteur de génération (4) étant appliqué sur la face latérale (38) et/ou sur la tranche (40).

9. Embout (2) selon l'une quelconque des revendications précédentes, dans lequel le tronçon d'extrémité (32) de l'élément longiligne (29 ; 31) comprend un crochet, une torsade, et/ou une vague, le transducteur de génération (4) étant situé sur le crochet, la torsade et/ou sur la vague.

10. Embout (2) selon la revendication 9, dans lequel le transducteur de génération (4) est fixé sur une surface plane.

11. Embout (2) selon l'une quelconque des revendications précédentes, **caractérisé en ce qu'**il comporte plusieurs tronçons d'extrémité (32) d'éléments longilignes (29; 31) distincts, l'embout (2) comprenant en outre plusieurs transducteurs de génération (4) d'une onde ultrasonore guidée, appliqués chacun sur un élément longiligne (29 ; 31) distinct.

12. Embout (2) selon l'une quelconque des revendications précédentes, dans lequel le transducteur de génération (4) est propre à émettre une onde ultrasonore guidée de fréquence comprise entre 10 KHz et 5 MHz, avantageusement entre 50 KHz et 500 KHz.

13. Embout (2) selon l'une quelconque des revendications précédentes, dans lequel le transducteur de génération (4) est choisi parmi un transducteur piézoélectrique avantageusement un transducteur à membrane piézoélectrique, un transducteur à angle variable, un transducteur interdigital et/ou un transducteur en forme d'un peigne excité, un transducteur EMAT, et/ou un transducteur à effet magnétostrictif.

14. Embout (2) selon l'une quelconque des revendications précédentes, **caractérisé en ce qu'**une fenêtre d'inspection visuelle (510) est ménagée dans l'épaisseur d'une partie arrière du capot (51), en regard d'au moins un élément longiligne (29) et/ou d'un collier de blocage arrière (62) du ou de chaque élément longiligne (29).

15. Dispositif (8) de mesure de l'intégrité d'un élément longiligne (29 ; 31) dans une ligne flexible comprenant :
- un embout (2) selon l'une quelconque des revendications précédentes ;
- au moins un transducteur de réception de l'onde ultrasonore guidée émise par le transducteur de génération (4), avantageusement formé par le transducteur de génération (4), un générateur (96) de signaux, connecté au ou à chaque transducteur de génération (4) et un détecteur (98) de signaux, connecté au transducteur de réception.

16. Procédé de mesure de l'intégrité d'au moins une ligne flexible comprenant les étapes suivantes :
- fourniture d'un dispositif (8) selon la revendication 15 ;
- génération d'une onde guidée à l'aide du transducteur de génération (4) dans un élément longiligne (29 ; 31) de la ligne flexible ;
- réception d'un signal capté par le transducteur de réception de l'élément longiligne (29 ; 31) ;
- traitement du signal reçu pour déterminer la présence de défauts dans l'élément longiligne (29 ; 31).

## Patentansprüche

1. Verbindungsstutzen (2) einer flexiblen Leitung, wobei die flexible Leitung mindestens eine rohrförmige Umhüllung (20) und mindestens ein langgestrecktes Element (29; 31), das um die rohrförmige Umhüllung (20) herum angeordnet ist, aufweist, wobei der Verbindungsstutzen umfasst:
- einen Endbereich der rohrförmigen Umhüllung (20);
- einen Endabschnitt (32) jedes langgestreckten Elementes (29; 31);
- ein Endbogenteil (50) und eine Abdeckung (51), die eine Kammer (52) zur Aufnahme jedes Endabschnittes (32) begrenzen;
**dadurch gekennzeichnet, dass** der Verbindungsstutzen (2) mindestens einen Wandler (4) zur Erzeugung einer in dem langgestreckten Element (29; 31) geführten Ultraschallwelle aufweist, wobei der Erzeugungswandler (4) an dem langgestreckten Element (29; 31) in der Aufnahmekammer (52) angebracht ist und der Erzeugungswandler (4) ein Volumen kleiner als 200 mm³, insbesondere zwischen 20 mm³ und 50 mm³ aufweist.

2. Verbindungsstutzen (2) nach Anspruch 1, bei der der Erzeugungswandler (4) eine Dicke, genommen in Bezug auf die Umhüllung (20), kleiner als 2 mm, vorzugsweise kleiner als 1/10 mm aufweist.

3. Verbindungsstutzen (2) nach einem beliebigen der vorhergehenden Ansprüche, **dadurch gekennzeichnet, dass** er ein Füllmaterial (70) für die Aufnahmekammer (52) aufweist, wobei das Füllmaterial (70) in Kontakt mit dem Endabschnitt (32) des langgestreckten Elementes (29; 31) ist und den Erzeugungswandler (4) bedeckt.

4. Verbindungsstutzen (2) nach einem beliebigen der vorhergehenden Ansprüche, bei dem die flexible Leitung mindestens einen Armierungsmantel (24, 25) umfasst, wobei das langgestreckte Element (29; 31) ein Armierungselement des Armierungsmantels (24, 25) ist.

5. Verbindungsstutzen (2) nach Anspruch 4, bei dem die flexible Leitung mindestens einen inneren Armierungsmantel (24) und mindestens einen äußeren Armierungsmantel (25) umfasst, wobei der Verbindungsstutzen (2) mindestens einen inneren Endabschnitt (32) eines Armierungselementes (29) des inneren Armierungsmantels (24) und mindestens einen äußeren Endabschnitt (32) eines Armierungselementes (29) des äußeren Armierungsmantels (25) umfasst,
wobei der Verbindungsstutzen (2) einen ersten Wandler (4) zur Erzeugung einer geführten Ultraschallwelle, der an dem inneren Endabschnitt (32) angebracht ist, und einen zweiten Wandler (4) zur Erzeugung einer geführten Ultraschallwellen, der an dem äußeren Endabschnitt (32) angebracht ist, umfasst.

6. Verbindungsstutzen (2) nach einem beliebigen der vorhergehenden Ansprüche, bei dem der Erzeugungswandler (4) an den Endabschnitt (32) des langgestreckten Elementes (29; 31) geklebt ist.

7. Verbindungsstutzen (2) nach einem beliebigen der vorhergehenden Ansprüche, bei dem der Erzeugungswandler (4) von einer Schicht aus Schutzmaterial mit einer Dicke kleiner als 50 % der Dicke des Erzeugungswandlers (4) bedeckt ist.

8. Verbindungsstutzen (2) nach einem beliebigen der vorhergehenden Ansprüche, bei dem der Endabschnitt (32) des langgestreckten Elementes (29; 31) mindestens eine Seitenfläche (38) und mindestens einen Rand (40), der an dem freien Ende des Endabschnittes (32) liegt, umfasst, wobei der Erzeugungswandler (4) an der Seitenfläche (38) und/oder an dem Rand (40) angebracht ist.

9. Verbindungsstutzen (2) nach einem beliebigen der vorhergehenden Ansprüche, bei dem der Endabschnitt (32) des langgestreckten Elementes (29; 31) einen Haken, eine Verdrillung und/oder eine Welle umfasst, wobei der Erzeugungswandler (4) auf dem Haken, der Verdrillung und/oder auf der Welle liegt.

10. Verbindungsstutzen (2) nach Anspruch 9, bei dem der Erzeugungswandler (4) an einer ebenen Fläche befestigt ist.

11. Verbindungsstutzen (2) nach einem beliebigen der vorhergehenden Ansprüche, **dadurch gekennzeichnet, dass** er mehrere Endabschnittes (32) von unterschiedlichen langgestreckten Elementen (29; 31) aufweist, wobei der Verbindungsstutzen (2) außerdem mehrere Wandler (4) zur Erzeugung einer geführten Ultraschallwelle umfasst, die jeweils an einem unterschiedlichen langgestreckten Element (29; 31) angebracht sind.

12. Verbindungsstutzen (2) nach einem beliebigen der vorhergehenden Ansprüche, bei dem der Erzeugungswandler (4) geeignet ist, eine geführte Ultraschallwelle einer Frequenz zwischen 50 kHz und 5 MHz, vorzugsweise zwischen 50 kHz und 500 kHz zu senden.

13. Verbindungsstutzen nach einem beliebigen der vorhergehenden Ansprüche, bei dem der Erzeugungswandler (4) ausgewählt ist aus einem piezoelektrischen Wandler, vorzugsweise einem Wandler mit piezoelektrischer Membran, einem Wandler variablen Winkels, einem verzahnten Wandler und/oder einem Wandler in Form eines erregten Kamms, einem EMAT Wandler und/oder einem magnetostriktiven Wandler.

14. Verbindungsstutzen (2) nach einem beliebigen der vorhergehenden Ansprüche, **dadurch gekennzeichnet, dass** ein Fenster (510) zur visuellen Inspektion in der Dicke eines hinteren Teils der Abdeckung (51) gegenüberliegend zu mindestens einem langgestreckten Element (29) und/oder einem hinteren Sicherungsring (62) des oder jedes langgestreckten Elementes (29) eingearbeitet ist.

15. Vorrichtung (8) zur Messung der Unversehrtheit eines langgestreckten Elementes (29; 31) in einer flexiblen Leitung, umfassend:
- einen Verbindungsstutzen (2) nach einem beliebigen der vorhergehenden Ansprüche;
- mindestens einen Wandler zum Empfang der geführten Ultraschallwellen, die von dem Erzeugungswandler (4) gesendet wird, vorteilhafter Weise gebildet von dem Erzeugungswandler (4), einem Signalgenerator (96), der an den oder jeden Erzeugungswandler (4) angeschlossen ist, und einem Signaldetektor (98), der mit dem Empfangswandler verbunden ist.

16. Verfahren zum Messen der Unversehrtheit mindestens einer flexiblen Leitung, die folgenden Schritte umfassend:
- Bereitstellen einer Vorrichtung (8) nach Anspruch 15;
- Erzeugen einer geführten Welle mithilfe des Erzeugungswandlers (4) in einem langgestreckten Element (29; 31) der flexiblen Leitung;
- Empfangen eines von dem Empfangswandler des langgestreckten Elementes (29; 31) aufgenommenen Signals;
- Verarbeiten des empfangenen Signals, um das Vorhandensein von Defekten in dem langgestreckten Element (29; 31) zu bestimmen.

## Claims

1. A connection end fitting (2) of a flexible line, the flexible line comprising at least one tubular sheath (20) and at least one elongate element (29; 31) arranged around the tubular sheath (20), the end fitting (2) comprising:
- an end part of the tubular sheath (20);
- an end section (32) of each elongate element (29; 31);
- an end vault (50) and a cover (51) defining a chamber (52) for receiving each end section (32);
**characterized in that** the end fitting (2) includes at least one transducer (4) for generating an ultrasonic wave guided in the elongate element (29; 31), the generation transducer (4) being placed on the elongate element (29; 31) in the receiving chamber (52), the generation transducer (4) having a volume of less than 200 mm³, in particular comprised between 20 mm³ and 50 mm³.

2. The end fitting (2) according to claim 1, wherein, the generation transducer (4) has a thickness, considered relative to the sheath (20), of less than 2 mm, advantageously less than 1/10 mm.

3. The end fitting (2) according to any one of the preceding claims, **characterized in that** it includes a filler material (70) of the receiving chamber (52), the filler material (70) being in contact with the end section (32) of the elongate element (29; 31) and covering the generation transducer (4).

4. The end fitting (2) according to any one of the preceding claims, wherein the flexible line comprises at least one armor ply (24, 25), the elongate element (29; 31) being an armor element of the armor ply (24, 25).

5. The end fitting (2) according to claim 4, wherein the flexible line comprises at least one inner armor ply (24) and at least one outer armor ply (25), the end fitting (2) comprising at least one inner end section (32) of at least one armor element (29) of the inner armor ply (24), and at least one outer end section (32) of at least one armor element (29) of the outer armor ply (25),
the end fitting (2) comprising a first generation transducer (4) of a guided ultrasonic wave applied on the inner end section (32), and a second generation transducer of a guided ultrasonic wave (4) applied on the outer end section (32).

6. The end fitting (2) according to any one of the preceding claims, wherein the generation transducer (4) is glued on the end section (32) of the elongate element (29; 31).

7. The end fitting (2) according to any one of the preceding claims, wherein the generation transducer (4) is covered by a layer of protective material with a thickness of less than 50% of the thickness of the generation transducer (4).

8. The end fitting (2) according to any one of the preceding claims, wherein the end section (32) of the elongate element (29; 31) comprises at least one side face (38) and at least one edge (40) located at the free end of the end section (32), the generation transducer (4) being applied on the side face (38) and/or on the edge (40).

9. The end fitting (2) according to any one of the preceding claims, wherein the end section (32) of the elongate element (29; 31) comprises a hook, twist and/or wave, the generation transducer (4) being located on the hook, twist and/or wave.

10. The end fitting (2) according to claim 9, wherein the generation transducer (4) is fastened on a planar surface.

11. The end fitting (2) according to any one of the preceding claims, **characterized in that** it includes several end sections (32) of separate elongate elements (29; 31), the end fitting (2) further comprising several generation transducers (4) of a guided ultrasonic wave, each applied on a separate elongate element (29; 31).

12. The end fitting (2) according to any one of the preceding claims, wherein the generation transducer (4) is able to emit a guided ultrasonic wave with a frequency comprised between 10 kHz and 5 MHz, advantageously between 50 kHz and 500 kHz.

13. The end fitting (2) according to any one of the preceding claims, wherein the generation transducer (4) is chosen from among a piezoelectric transducer, advantageously a piezoelectric membrane transducer, a variable-angle transducer, an interdigital transducer and/or an excited comb transducer, an EMAT transducer and/or a magnetostrictive effect transducer.

14. The end fitting (2) according to any one of the preceding claims, **characterized in that** a visual inspection window (510) is arranged in the thickness of a rear part of the cover (51), across from at least one elongate element (29) and/or a rear blocking collar (62) of the or each elongate element (29).

15. A device (8) for measuring the integrity of an elongate element (29; 31) in a flexible line, comprising:
- an end fitting (2) according to any one of the preceding claims;
- at least one transducer for receiving the guided ultrasonic wave emitted by the generation transducer (4), advantageously formed by the generation transducer (4), a signal generator (96), connected to the or each generation transducer (4) and a signal detector (98), connected to the receiving transducer.

16. A method for measuring the integrity of at least one flexible line, comprising the following steps:
- providing a device (8) according to claim 15;
- generating a guided wave using the generation transducer (4) in an elongate element (29; 31) of the flexible line;
- receiving a signal captured by the reception transducer of the elongate element (29; 31);
- processing the received signal to determine the presence of defects in the elongate element (29; 31).
